# EUROPEAN PATENT SPECIFICATION

(11) **EP 4 394 604 B1**
(45) Date of publication and mention of the grant of the patent: **25.02.2026**
(21) Application number: 23197219.1
(22) Date of filing: 13.09.2023
(51) Int. Cl.: G06F 11/07

(54) **FAULT PROCESSING METHOD AND APPARATUS, ELECTRONIC DEVICE, AND STORAGE MEDIUM**
FEHLERVERARBEITUNGSVERFAHREN UND -VORRICHTUNG, ELEKTRONISCHE VORRICHTUNG UND SPEICHERMEDIUM
PROCÉDÉ ET APPAREIL DE TRAITEMENT DE DÉFAILLANCE, DISPOSITIF ÉLECTRONIQUE ET SUPPORT DE STOCKAGE

(30) Priority: 30.12.2022 CN 202211742631
(43) Date of publication of application: 03.07.2024
(73) Proprietor: Beijing Horizon Information Technology Co., Ltd., Beijing 100094 (CN)
(72) Inventor: LI, Wenxing, Beijing, 100094 (CN); LI, Jianjun, Beijing, 100094 (CN); LIU, Qingyu, Beijing, 100094 (CN); LI, Jing, Beijing, 100094 (CN)
(74) Representative: Dehns Germany Partnerschaft mbB

(56) References cited:
- US-A1- 2004 194 097

## Description

### FIELD OF THE INVENTION

The present disclosure relates to technologies of functional safety, and in particular, to a fault processing method and apparatus, an electronic device, and a storage medium.

### BACKGROUND OF THE INVENTION

In in-vehicle applications, there are requirements on functional safety classes for chip control and storage circuits. Therefore, a control path, a data path, a memory, and the like all require corresponding security modules, such as security protection circuits or security protection programs, for hardware fault detection and software fault detection. If a hardware fault or a software fault is detected, fault information needs to be reported to a fault processing module. The fault processing module uniformly arbitrates the received fault information through round robin. One piece of fault information is authorized to be processed at one time, and other fault information needs to wait for round robin. For example, if a processing type of the fault information currently authorized for processing is an interrupt, an interrupt signal is sent to a processor. The processor responds to the interrupt and processes the fault information, and notifies the fault processing module to perform round robin on next fault information after completing the processing. However, when a fault occurs, the fault may diverge and cause a series of faults, which can easily lead to an interrupt storm. Alternatively, if one fault cannot be resolved, other faults cannot be responded to all the time. It can be learned that processing efficiency of the fault processing module in related technologies is relatively low. US 2004/0194097 A1 discloses a task management control method and apparatus comprising: a plurality of task identifiers adapted to identify a task requesting service by a central processing unit; an arbitration system external to the central processing unit adapted to select a task identifier and to provide to the central processing unit the location of data or at least one instruction, which location is determined by the identity of the task identifier and to provide to the central processing unit the location of at least one instruction to initiate processing of the task, comprising arbitration value determination logic adapted to determine at least one arbitration value of each task identifier requesting service, and arbitration logic adapted to select a task identifier requesting service based upon the at least one arbitration value for each task identifier requesting service.

### SUMMARY OF THE INVENTION

The invention is defined by the appended independent claims.

To resolve the foregoing technical problems such as low fault processing efficiency, the present invention according to the independent claims is proposed. Embodiments of the present invention provide a fault processing method and apparatus, an electronic device, and a storage medium.

According to an aspect of the present invention, a fault processing method is provided, including: classifying at least one piece of to-be-processed fault information to determine fault classes to which all the to-be-processed fault information respectively belongs, wherein the to-be-processed fault information includes a fault identifier of a to-be-processed fault; arbitrating the to-be-processed fault information included at all fault classes respectively, to determine target to-be-processed fault information respectively corresponding to all the fault classes; and performing corresponding fault processing based on all the target to-be-processed fault information.

According to another aspect of the present invention, a fault processing apparatus is provided, including: a fault classification module, configured to classify at least one piece of to-be-processed fault information to determine fault classes to which all the to-be-processed fault information respectively belongs, wherein the to-be-processed fault information includes a fault identifier of a to-be-processed fault; and a fault arbitration module, configured to arbitrate the to-be-processed fault information included at all fault classes respectively, to determine target to-be-processed fault information respectively corresponding to all the fault classes, and perform corresponding fault processing based on all the target to-be-processed fault information.

According to still another aspect of the present invention, a computer readable storage medium is provided, wherein the storage medium stores a computer program, and the computer program is used for implementing the fault processing method described in any one of the foregoing embodiments of the present disclosure; or the storage medium is configured to store data that needs to be stored by at least one hardware logic circuit of the fault processing apparatus described in any one of the foregoing embodiments, to enable the hardware logic circuit to implement corresponding functions during operation.

According to yet another aspect of the present invention, an electronic device is provided, wherein the electronic device includes: a processor; and a memory configured to store processor-executable instructions, wherein the processor is configured to read the executable instructions from the memory and execute the instructions to implement the fault processing method described in any one of the foregoing embodiments of the present disclosure; or the electronic device includes the fault processing apparatus described in any one of the foregoing embodiments, wherein at least a portion of the fault processing apparatus is implemented by using a hardware logic circuit.

Based on the fault processing method and apparatus, the electronic device, and the storage medium provided in the foregoing embodiments of the present invention, at least one piece of to-be-processed fault information is classified to determine the fault classes to which all the to-be-processed fault information belongs; then the to-be-processed fault information at all the fault classes is arbitrated respectively, to determine the target to-be-processed fault information respectively corresponding to all the fault classes; and then the fault processing is performed on the target to-be-processed fault information at all the fault classes. In this way, faults at a plurality of fault classes can be processed concurrently, which avoids occurrence of interrupt storm or a situation of no responses, thereby effectively improving fault processing efficiency, and resolving problems such as interrupt storm or starving to death due to lack of responses that are easily caused in related technologies.

The technical solutions of the present disclosure are further described below in detail with reference to the accompanying drawings and the embodiments.

### BRIEF DESCRIPTION OF THE DRAWINGS

By describing the embodiments of the present disclosure more detailed with reference to the accompanying drawings, the foregoing and other objectives, features, and advantages of the present disclosure will become more apparent. The accompanying drawings are used to provide further understanding of the embodiments of the present disclosure, constitute a part of the specification, and are used to explain the present disclosure together with the embodiments of the present disclosure; however, they do not constitute limitation to the present disclosure. In the accompanying drawings, the same reference numerals generally represent the same components or steps.
FIG. 1 is an exemplary application scenario of a fault processing method according to the present disclosure;
FIG. 2 is a schematic flowchart of a fault processing method according to an exemplary embodiment of the present disclosure;
FIG. 3 is a schematic flowchart of a fault processing method according to another exemplary embodiment of the present disclosure;
FIG. 4 is a schematic flowchart of a fault processing method according to still another exemplary embodiment of the present disclosure;
FIG. 5 is a schematic diagram of a structure of a fault processing apparatus according to an exemplary embodiment of the present disclosure;
FIG. 6 is a schematic diagram of a structure of a fault processing apparatus according to another exemplary embodiment of the present disclosure;
FIG. 7 is a schematic diagram of a structure of an arbiter 521 according to an exemplary embodiment of the present disclosure;
FIG. 8 is a schematic diagram of a structure of a fault processing apparatus according to still another exemplary embodiment of the present disclosure; and
FIG. 9 is a schematic diagram of a structure of an electronic device according to an application embodiment of the present disclosure.

### DETAILED DESCRIPTION OF THE EMBODIMENTS

Exemplary embodiments of the present disclosure are described below in detail with reference to the accompanying drawings. Obviously, the described embodiments are merely a part, rather than all of embodiments of the present disclosure. It should be understood that the present disclosure is not limited by the exemplary embodiments described herein.

It should be noted that unless otherwise specified, the scope of the present disclosure is not limited by numeric expressions, numerical values, and relative arrangement of components and steps described in these embodiments.

A person skilled in the art may understand that terms such as "first" and "second" in the embodiments of the present disclosure are merely configured to distinguish between different steps, devices, or modules, and indicate neither any particular technical meaning, nor necessarily logical ordering among them.

It should be further understood that, in the embodiments of the present disclosure, the term "multiple"/"a plurality of" may refer to two or more; and the term "at least one" may refer to one, two, or more.

It should be further understood that, any component, data, or structure involved in the embodiments of the present disclosure can be generally construed to one or more, unless clearly stated or the context indicates otherwise.

In addition, the term "and/or" in the present disclosure refers to only an association relationship that describes associated objects, indicating presence of three relationships. For example, A and/or B may indicate presence of three cases: A alone, both A and B, and B alone. In addition, the character "/" in the present disclosure generally indicates an "or" relationship of associated objects.

The embodiments of the present disclosure can be applicable to a terminal device, a computer system, a server, and other electronic devices, which can be operated together with numerous other general-purpose or special-purpose computing system environments or configurations. Well-known examples of a terminal device, a computing system, and environment and/or configuration applicable to be used with the terminal device, the computer system, the server, and other electronic devices include but are not limited to: a personal computer system, a server computer system, a thin client, a thick client, a handheld or laptop device, a microprocessor-based system, a set-top box, programmable consumer electronics, a network personal computer, a small computer system, a mainframe computer system, and a distributed cloud computing technology environment including any of the foregoing systems.

### Overview of the present disclosure

In a process of implementing the present disclosure, the inventor finds that in in-vehicle applications, there are requirements on functional safety classes for chip control and storage circuits. Therefore, a control path, a data path, a memory, and the like all require corresponding security modules, such as security protection circuits or security protection programs, for hardware fault detection and software fault detection. If a hardware fault or a software fault is detected, fault information needs to be reported to a fault processing module. The fault processing module uniformly arbitrates the received fault information through round robin. One piece of fault information is authorized to be processed at one time, and other fault information needs to wait for round robin. For example, if a processing type of the fault information currently authorized for processing is an interrupt, an interrupt signal is sent to a processor. The processor responds to the interrupt and processes the fault, and notifies the fault processing module to perform round robin on next fault information after completing the processing. However, when a fault occurs, the fault may diverge and cause a series of faults, which can easily lead to an interrupt storm. Alternatively, if one fault cannot be resolved, other faults cannot be responded to all the time. It can be learned that processing efficiency of the fault processing module in related technologies is relatively low.

### Exemplary overview

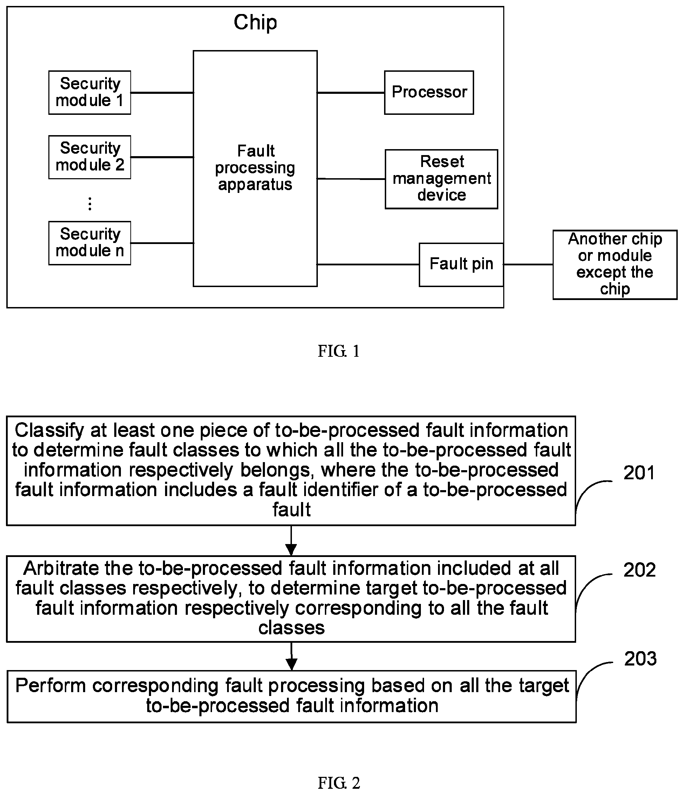

FIG. 1 is an exemplary application scenario of a fault processing method according to the present disclosure.

In in-vehicle applications, corresponding security modules can be disposed for hardware and software of a control path, a data path, a memory, and the like of a chip according to requirements on functional safety, so as to detect hardware faults and/or software faults. Each security module may correspond to one type of fault detection. When detecting a fault, the security module may report fault information to a fault processing module of the chip (that is, a fault processing apparatus in the present disclosure). The fault information may serve as to-be-processed fault information in the present disclosure. At least one piece of to-be-processed fault information can be classified by using the fault processing method (which is implemented in the fault processing apparatus) in the present disclosure, to determine fault classes to which all the to-be-processed fault information respectively belongs. The to-be-processed fault information includes a fault identifier of a to-be-processed fault. The fault identifier may be an identifier pre-configured for the security module. Specific representations of the fault identifier can be set according to actual requirements, such as a number or other representations, which is not specifically limited. After all fault classes to which all the to-be-processed fault information respectively belongs are determined, the to-be-processed fault information included at all the fault classes is arbitrated respectively to determine target to-be-processed fault information respectively corresponding to all the fault classes. The target to-be-processed fault information represents the to-be-processed fault information that is arbitrated from a plurality of pieces of to-be-processed fault information and that currently needs to be processed. The remaining to-be-processed fault information needs to keep waiting. For each fault class, after the target to-be-processed fault information is determined, corresponding fault processing is performed based on the target to-be-processed fault information to resolve a corresponding fault. For example, an interrupt signal is sent to a processor, so that the processor responds to an interrupt and performs corresponding fault processing. For another example, a reset signal is sent to a reset management device, so that the reset management device resets a fault source. A signal can also be sent to another chip or module except the chip through a fault pin, to notify, for example, another chip or module that a fault occurs to the chip. In the present disclosure, fault classes are classified for the to-be-processed fault information. Therefore, there may be one or more pieces of to-be-processed fault information queuing up at each fault class, and the to-be-processed fault information at different fault classes may be arbitrated concurrently, thereby avoiding occurrence of an interrupt storm or a situation of no responses, and greatly improving fault processing efficiency.

In an optional embodiment, the fault identifier may also be determined by using a connection interface of the security module. For example, each security module is connected to the fault processing apparatus through a certain interface. The fault information reported by various security modules to the fault processing apparatus may be the same. For example, 1 indicates that a fault occurs. In this case, the fault processing apparatus can determine the fault identifier of the to-be-processed fault by using the interface reporting the fault information, to obtain the to-be-processed fault information for subsequent processing. This can be specifically set according to actual requirements.

### Exemplary method

FIG. 2 is a schematic flowchart of a fault processing method according to an exemplary embodiment of the present disclosure. This embodiment can be applicable to an electronic device, such as an in-car computing platform. As shown in FIG. 2, the method includes the following steps.

Step 201. Classify at least one piece of to-be-processed fault information to determine fault classes to which all the to-be-processed fault information respectively belongs, wherein the to-be-processed fault information includes a fault identifier of a to-be-processed fault.

A quantity of the fault classes is a positive integer, which can be set according to actual requirement. For example, 3 classes or 4 classes may be set. The fault identifier of the to-be-processed fault may be carried in fault information reported by a security module, or may be determined by using a connection interface between the security module and a fault processing apparatus. This can be specifically set according to actual requirements. The fault class to which the to-be-processed fault information belongs is determined based on a pre-configured corresponding relationship between the fault identifier and the fault class.

In an optional embodiment, once receiving a piece of fault information, the fault processing apparatus can determine the to-be-processed fault information corresponding to the fault information in a real-time manner, and determine the fault class to which the to-be-processed fault information belongs, to allocate the to-be-processed fault information to a queue of the corresponding fault class for queuing.

In an optional embodiment, there may be a priority between the fault classes. For example, there are n fault classes, which respectively are class 1, class 2, ..., and class n, where n is a positive integer. A lower class value indicates a higher priority. In other words, a priority of the class 1 is the highest. To-be-processed fault information with different severity levels can be configured for fault classes with different priorities. This can be specifically set according to actual requirements.

Step 202. Arbitrate the to-be-processed fault information included at all fault classes respectively, to determine target to-be-processed fault information respectively corresponding to all the fault classes.

Arbitration for different fault classes may be independent of each other, without affecting each other. For any fault class, the to-be-processed fault information included at this fault class is arbitrated to determine the target to-be-processed fault information corresponding to this fault class. The target to-be-processed fault information represents the to-be-processed fault information that is arbitrated from a plurality of pieces of to-be-processed fault information and that currently needs to be processed. The remaining to-be-processed fault information needs to keep waiting for a next round of arbitration.

In an optional embodiment, for any fault class, the to-be-processed fault information included at this fault class can be arbitrated based on a preset arbitration rule. The to-be-processed fault information at this fault class is arbitrated based on a preset round robin algorithm. This can be specifically set according to actual requirements.

In an optional embodiment, for the case that there is a priority between the fault classes, when a quantity of processing times corresponding to the target to-be-processed fault information at a certain fault class (such as a class 3) meets a certain condition, the fault class of the target to-be-processed fault information can be upgraded to a class superior to the current fault class based on a priority of the current fault class. For example, for the target to-be-processed fault information at the class 3, the class 3 is upgraded to the class 2, so that the target to-be-processed fault information serves as the to-be-processed fault information at the class 2 to be arbitrated. This can be specifically set according to actual requirements.

Step 203. Perform corresponding fault processing based on all the target to-be-processed fault information.

Processing manners corresponding to different target to-be-processed fault information may be different. Therefore, after the target to-be-processed fault information at all the fault classes is determined, corresponding fault processing needs to be performed based on all the target to-be-processed fault information. For example, if some target to-be-processed fault information needs to be processed by using a processor, an interrupt signal needs to be sent to the processor. If some target to-be-processed fault information needs to be processed by using a reset management device (or a reset management module), a reset signal is sent to the reset management device. For some other target to-be-processed fault information, if a notification message needs to be sent to another chip or module except a current chip where the fault processing apparatus is located, the notification message is sent to another chip or module by using a fault pin of the current chip. This can be specifically set according to actual requirements. The target to-be-processed fault information at different fault classes can be processed concurrently, without affecting each other.

According to the fault processing method provided in this embodiment, at least one piece of to-be-processed fault information is classified to determine the fault classes to which all the to-be-processed fault information belongs; then the to-be-processed fault information at all the fault classes is arbitrated respectively, to determine the target to-be-processed fault information respectively corresponding to all the fault classes; and then the fault processing is performed on the target to-be-processed fault information at all the fault classes. In this way, faults at a plurality of fault classes can be processed concurrently, which avoids occurrence of an interrupt storm or a situation of no responses, thereby effectively improving fault processing efficiency, and resolving problems such as an interrupt storm or starving to death due to lack of responses that are easily caused in related technologies.

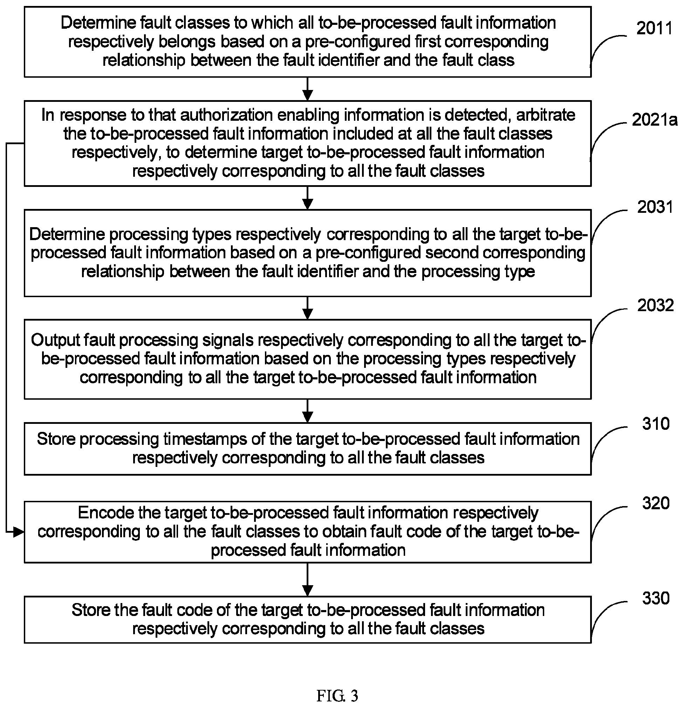

FIG. 3 is a schematic flowchart of a fault processing method according to another exemplary embodiment of the present disclosure.

In an optional embodiment, step 201 can specifically include the following steps.

Step 2011. Determine the fault classes to which all the to-be-processed fault information respectively belongs, based on a pre-configured first corresponding relationship between the fault identifier and the fault class.

The first corresponding relationship may be pre-configured into a register, or may be stored in other manners. This can be specifically set according to actual requirements. Because the first corresponding relationship represents a corresponding relationship between the fault identifier and the fault class, matching the fault identifier included in the to-be-processed fault information with the first corresponding relationship can determine the fault classes to which all the to-be-processed fault information belongs.

In this embodiment, the fault classes to which all the to-be-processed fault information respectively belongs can be conveniently determined based on the pre-configured first corresponding relationship between the fault identifiers and the fault classes, thereby effectively implementing class classification for the to-be-processed fault information.

In an optional embodiment, step 203 of performing corresponding fault processing based on all the target to-be-processed fault information includes the following steps.

Step 2031. Determine processing types respectively corresponding to all the target to-be-processed fault information based on a pre-configured second corresponding relationship between the fault identifiers and processing types.

The processing types refer to types of specific fault processing manners for the target to-be-processed fault information. The processing types can include an interrupt type, a reset type, and an outbound type. The interrupt type refers to a type that an interrupt signal needs to be sent to the processor to enable the processor to perform corresponding fault processing. The reset type refers to a type that a fault source needs to be reset. The outbound type refers to a type that another external chip or module except the chip where the fault processing apparatus is located needs to be notified. More other types can also be set according to actual requirement, which is not specifically limited. The second corresponding relationship may be pre-configured into the register, or may be stored or configured in other manners. The second corresponding relationship between the specific fault identifier and the processing type can be set according to actual requirements, which is not limited in the present disclosure.

Step 2032. Output fault processing signals respectively corresponding to all the target to-be-processed fault information based on the processing types respectively corresponding to all the target to-be-processed fault information.

Different fault processing signals need to be output for different processing types. The fault processing signals can include the interrupt signal output to the processor, the reset signal output to the reset management device, the notification signal output to another chip or module except the current chip, and the like. This can be specifically set according to actual requirements. The fault processing signal corresponding to the interrupt type is the interrupt signal, the fault processing signal corresponding to the reset type is the reset signal, and the fault processing signal corresponding to the outbound type is the notification signal output to another chip or module. This can be specifically set according to actual requirements.

According to this embodiment, different fault processing signals can be output for different processing types, so that a part responsible for corresponding fault processing can perform corresponding fault processing in a timely manner based on the fault processing signal, to resolve a fault in a timely manner.

In an optional embodiment, step 202 of arbitrating the to-be-processed fault information included at all the fault classes respectively, to determine the target to-be-processed fault information respectively corresponding to all the fault classes includes the following steps.

Step 2021a. In response to that authorization enabling information is detected, arbitrate the to-be-processed fault information included at all the fault classes respectively, to determine the target to-be-processed fault information respectively corresponding to all the fault classes.

The authorization enabling information is used to trigger an arbitration operation. For any fault class, one piece of target to-be-processed fault information can be determined every time arbitration is performed, or two or more pieces of target to-be-processed fault information can be arbitrated based on an actual processing capability. After arbitration is performed, the fault processing stage is entered, and other to-be-processed fault information except the one determined as the target to-be-processed fault information needs to keep waiting for a next round of arbitration. At this stage, the authorization enabling information is invalid, until the authorization enabling information is configured to trigger a new round of arbitration after the fault processing corresponding to the target to-be-processed fault information is completed.

In an optional embodiment, the authorization enabling information can be configured by using a register. For example, when the register is configured as 1, it is determined that the authorization enabling information is detected by detecting that a state of the register status is 1. When arbitration is completed, the state of the register is configured as 0, which indicates no enabling. In this case, no authorization enabling information is detected. On this basis, the to-be-processed fault information at all fault classes is arbitrated and processed.

According to this embodiment, the arbitration of the to-be-processed fault information at each fault class is controlled through the authorization enabling information, thereby ensuring that the to-be-processed fault information at all fault classes can be processed in an orderly manner.

In an optional embodiment, the method in the present disclosure further includes the following step.

Step 310. Store processing timestamps of the target to-be-processed fault information respectively corresponding to all the fault classes.

The processing timestamp is used to represent processing time of the target to-be-processed fault information. The processing timestamp may be a timestamp when the to-be-processed fault information is determined as the target to-be-processed fault information, or may be a timestamp for outputting a corresponding fault processing signal for the target to-be-processed fault information. This can be specifically set according to actual requirements. The processing timestamp can be used for subsequent fault analysis and tracing, such as collecting statistics about frequency and temporal regularity of faults.

According to this embodiment, recording the processing timestamp of the arbitrated target to-be-processed fault information can provide effective data basis for subsequent fault analysis and tracing.

In an optional embodiment, the method in the present disclosure further includes the following steps.

Step 320. Encode the target to-be-processed fault information respectively corresponding to all the fault classes to obtain a fault code of the target to-be-processed fault information.

For different fault classes, the fault code may be determined by using different encoding rules or by using the same encoding rule. The specific encoding rule can be set according to actual requirements. A setting principle of the encoding rule is to enable the obtained fault code to uniquely identify the current fault and to enable that the fault source can be traced. For example, the fault code can include the fault identifier, the processing timestamp, the processing type, the fault class, and other relevant information. Different information can be represented by different numbers or symbols. For example, the fault code is represented by binary code. Various information is represented by states with different bits, which can be specifically set according to actual requirements. The fault source can be located by parsing the fault code. For example, the fault processing apparatus in the present disclosure sends an interrupt signal to the processor. In response to an interrupt, the processor needs to query the fault code, locates the fault source based on the fault code, and then performs corresponding fault processing on the fault source.

Step 330. Store the fault code of the target to-be-processed fault information respectively corresponding to all the fault classes.

Storage manners of the fault code can be set according to actual requirements. For example, the fault code may be stored by using the register or in other manners.

According to this embodiment, the fault code is obtained by encoding the target to-be-processed fault information performed with arbitration processing, and the fault code is stored, so that accurate and effective data support can be provided for fault source localization in the following fault processing.

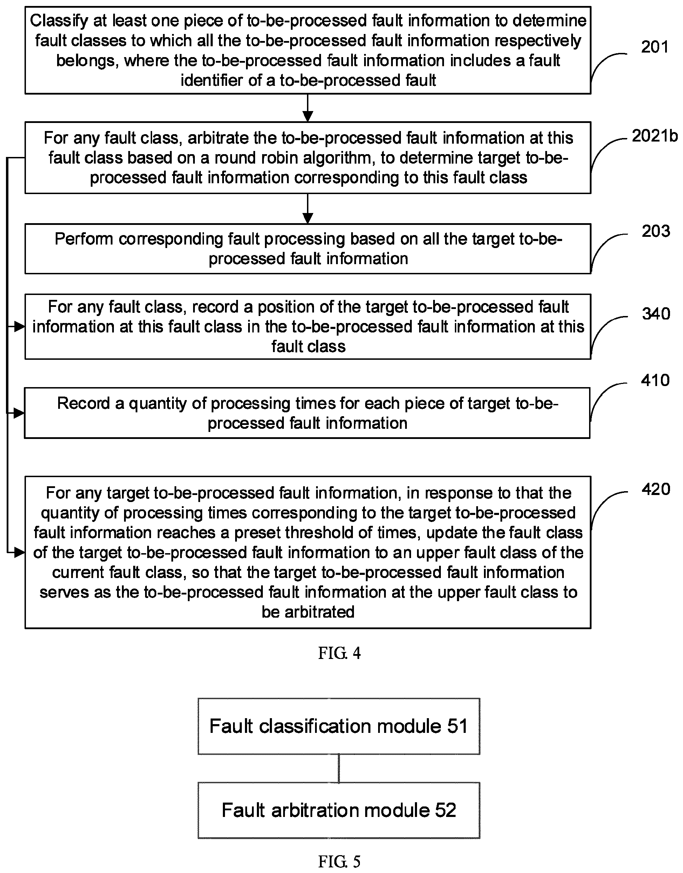

FIG. 4 is a schematic flowchart of a fault processing method according to still another exemplary embodiment of the present disclosure.

In an optional embodiment, step 202 of arbitrating the to-be-processed fault information included at all the fault classes respectively, to determine the target to-be-processed fault information respectively corresponding to all the fault classes includes:

Step 2021b. For any fault class, arbitrate the to-be-processed fault information at this fault class based on a round robin algorithm, to determine the target to-be-processed fault information corresponding to this fault class.

Arbitrating based on the round robin algorithm refers to sequentially arbitrating various to-be-processed fault information as target to-be-processed fault information for processing. A sequence of the to-be-processed fault information can be determined based on reporting time of the to-be-processed fault information.

According to this embodiment, the to-be-processed fault information at all the fault classes is arbitrated based on the round robin algorithm, so that it can be ensured that all the to-be-processed fault information can be evenly arbitrated, thereby avoiding a situation of long waiting time.

In an optional embodiment, the sequence of the to-be-processed fault information can also be determined according to a preset priority rule. This can be specifically set according to actual requirements. For example, for some faults with severe effects, higher priorities can be set. Thus, during queuing, the to-be-processed fault information can be queued for arbitration according to the priorities. In this case, the to-be-processed fault information with a same priority can be queued according to the reporting time.

In an optional embodiment, the method in the present disclosure further includes:

Step 340. For any fault class, record a position of the target to-be-processed fault information at this fault class in the to-be-processed fault information at this fault class.

The position of the target to-be-processed fault information at any fault class in the to-be-processed fault information at this fault class indicates a position where the to-be-processed fault information at this fault class is performed with round robin, helping quickly determine the to-be-processed fault information that needs to be performed with a round robin in next arbitration.

According to this embodiment, the position of each piece of target to-be-processed fault information in the to-be-processed fault information at the fault class to which the target to-be-processed fault information belongs is recorded, so that a position for round robin can be quickly determined during a next round robin, thereby improving processing efficiency.

In an optional embodiment, after step 202 of arbitrating the to-be-processed fault information included at all the fault classes respectively, to determine the target to-be-processed fault information respectively corresponding to all the fault classes, the method further includes:

Step 410. Record a quantity of processing times for each piece of target to-be-processed fault information.

For any fault source, a plurality of faults may occur. The plurality of faults are the same fault. For the same fault, report is required once every time the fault occurs, and the fault processing apparatus needs to perform processing once. When the to-be-processed fault information of the fault is arbitrated as the target to-be-processed fault information, the quantity of processing times for the target to-be-processed fault information can be maintained in a real-time manner. After each processing, the quantity of processing times is increased by 1.

The method in the present disclosure further includes:

Step 420. For any target to-be-processed fault information, in response to that the quantity of processing times corresponding to the target to-be-processed fault information reaches a preset threshold of times, update the fault class of the target to-be-processed fault information to an upper fault class of the current fault class, so that the target to-be-processed fault information serves as the to-be-processed fault information at the upper fault class to be arbitrated.

The preset threshold of times can be set according to actual requirements; for example, it may be set to 3 or 4. This is not specifically limited. When the quantity of processing times corresponding to a piece of target to-be-processed fault information reaches the preset threshold of times, the fault class of the target to-be-processed fault information is upgraded. For example, if the current fault class of the target to-be-processed fault information is a third class, the current fault class is upgraded to a second class, and the target to-be-processed fault information serves as the to-be-processed fault information at the second fault class to be queued for arbitration. If being a second class, the current fault class can be upgraded to a first class.

In an optional embodiment, step 420 may be performed before step 203. In this case, for the target to-be-processed fault information, step 203 can be temporarily not performed or can be performed. This can be specifically set according to actual requirements.

In an optional embodiment, step 402 may alternatively be performed after step 203. To be specific, after step 203 is performed for the target to-be-processed fault information, the quantity of processing times thereof is increased by 1. In this case, if the quantity of processing times exceeds the preset threshold of times, the fault class of the target to-be-processed fault information can be directly marked as the upgraded class. When the fault occurs again, the target to-be-processed fault information is directly used as the to-be-processed fault information at the upgraded class to be queued for arbitration. This can be specifically set according to actual requirements.

In an optional embodiment, the target to-be-processed fault information for which the fault class is upgraded can be referred to as a cascading fault. During encoding, the fault code can include corresponding cascading information to facilitate localization of the fault sources during the subsequent fault processing. For example, for the target to-be-processed fault information that is a cascading fault, when an interrupt signal is sent to the processor, the processor receives the interrupt signal and queries the fault code. Based on the fault code, if it is determined that the target to-be-processed fault information is a cascading fault, the fault code of the target to-be-processed fault information at a next fault class is read, and the fault source is located to perform corresponding fault clearing processing on the fault source, so as to resolve the fault.

In an optional embodiment, the fault processing signal corresponding to the target to-be-processed fault information at the highest fault class can be set to the notification signal with the outbound type. The fault processing signals corresponding to the target to-be-processed fault information at other fault classes can include the interrupt signal and the reset signal. This can be specifically set according to actual requirements.

According to this embodiment, the fault class is upgraded for the target to-be-processed fault information with a quantity of processing times exceeding the preset threshold of times, so that severity of the fault can be represented. In this way, fault processing can be performed for different fault classes. For example, after the fault class is upgraded to the highest level, other external chips or modules are notified to resolve the fault as soon as possible, thereby ensuring the safe chip operation.

Any fault processing method provided in the embodiments of the present disclosure can be implemented by any suitable device with a data processing capability, including but not limited to a terminal device and a server. Alternatively, any fault processing method provided in the embodiments of the present disclosure can be implemented by the processor. For example, the processor implements any fault processing method described in the embodiments of the present disclosure by invoking a corresponding instruction stored in a memory. Details are not described below again.

### Exemplary apparatus

FIG. 5 is a schematic diagram of a structure of a fault processing apparatus according to an exemplary embodiment of the present disclosure. The device in this embodiment can be configured to implement the corresponding method embodiments of the present disclosure. The device shown in FIG. 5 includes a fault classification module 51 and a fault arbitration module 52.

The fault classification module 51 is configured to classify at least one piece of to-be-processed fault information to determine fault classes to which all the to-be-processed fault information respectively belongs. The to-be-processed fault information includes a fault identifier of a to-be-processed fault.

The fault arbitration module 52 is configured to arbitrate the to-be-processed fault information included at all fault classes respectively, to determine target to-be-processed fault information respectively corresponding to all the fault classes, and perform corresponding fault processing based on all the target to-be-processed fault information.

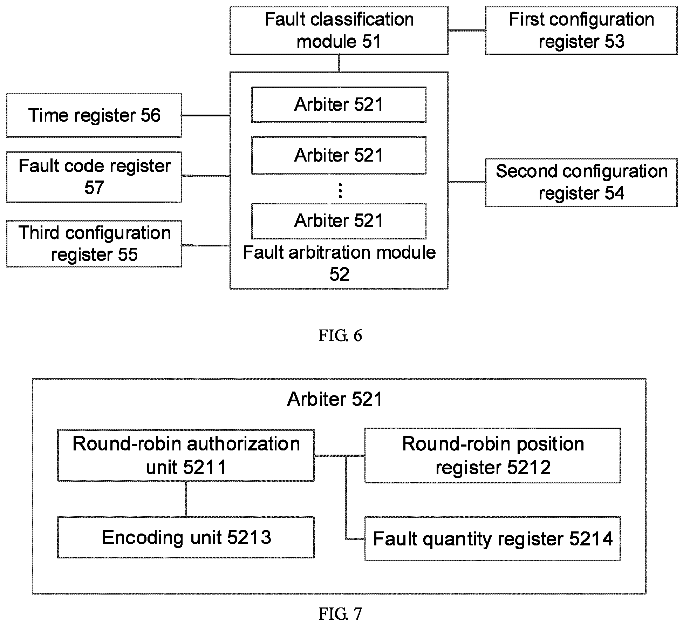

FIG. 6 is a schematic diagram of a structure of a fault processing apparatus according to another exemplary embodiment of the present disclosure.

In an optional embodiment, the fault arbitration module 52 includes at least two arbiters 521.

Each arbiter 521 of the at least two arbiters corresponds to one fault class. Each arbiter 521 is configured to arbitrate the to-be-processed fault information at the fault class corresponding to the arbiter 521 to determine the target to-be-processed fault information at the fault class, and perform corresponding fault processing based on the target to-be-processed fault information.

In an optional embodiment, the arbiters 521 can be implemented through hardware logic. For a specific operation principle of each arbiter 521, refer to the foregoing method embodiments, and details are not described herein again.

In an optional embodiment, the apparatus in the present disclosure further includes a first configuration register 53.

The first configuration register 53 is configured to store a pre-configured first corresponding relationship between the fault identifier and the fault class.

The fault classification module 51 is configured to determine the fault classes to which the to-be-processed fault information respectively belongs based on the first corresponding relationship stored by the first configuration register 53, and transmit the to-be-processed fault information to the corresponding arbiter 521 in the fault arbitration module 52 based on the fault classes to which the to-be-processed fault information respectively belongs.

In an optional embodiment, the apparatus in the present disclosure further includes a second configuration register 54.

The second configuration register 54 is configured to store a pre-configured second corresponding relationship between the fault identifier and a processing type.

The fault arbitration module 52 is further configured to determine processing types respectively corresponding to all the target to-be-processed fault information based on the second corresponding relationship stored by the second configuration register 54, and output fault processing signals respectively corresponding to all the target to-be-processed fault information based on the processing types respectively corresponding to all the target to-be-processed fault information.

The fault arbitration module 52 is connected to the second configuration register 54, to read the second corresponding relationship from the second configuration register.

In an optional embodiment, the arbiters 521 in the fault arbitration module 52 are respectively connected to the second configuration register 54. Each arbiter is configured to determine the processing type corresponding to the target to-be-processed fault information of the arbiter based on the second corresponding relationship stored by the second configuration register 54, and output the fault processing signal corresponding to the target to-be-processed fault information based on the processing type.

In an optional embodiment, the apparatus in the present disclosure further includes a third configuration register 55.

The third configuration register 55 is configured to store authorization enabling information in response to an enabling configuration instruction.

The fault arbitration module 52 is further configured to arbitrate, in response to that the authorization enabling information of the third configuration register 55 is detected, the to-be-processed fault information included at all the fault classes respectively, to determine the target to-be-processed fault information respectively corresponding to all the fault classes.

In an optional embodiment, any arbiter 521 in the fault arbitration module 52 is connected to the third configuration register 55, and is configured to arbitrate, in response to that the authorization enabling information of the third configuration register 55 is detected, the to-be-processed fault information included at the fault class corresponding to the arbiter, to determine the target to-be-processed fault information corresponding to the fault class.

In an optional embodiment, a quantity of third configuration registers 55 may be the same as that of the arbiters 521. In other words, each arbiter 521 corresponds to one third configuration register 55. In this way, arbitration can be triggered for different fault classes respectively.

In an optional embodiment, the third configuration register 55 is further configured to clear the authorization enabling information according to a preset period.

The preset cycle can be determined based on processing time of a round robin algorithm. Once the arbitration is completed, the authorization enabling information can be cleared to wait for next configuration of the authorization enabling information. The authorization enabling information can be configured by a processor. After a fault source corresponding to the target to-be-processed fault information is cleared, the processor configures the authorization enabling information to the third configuration register 55, to trigger a new round of arbitration.

In an optional embodiment, the apparatus in the present disclosure further includes a time register 56.

The time register 56 is configured to store processing timestamps of the target to-be-processed fault information respectively corresponding to all the fault classes.

The fault arbitration module 52 is further configured to write the processing timestamps of the target to-be-processed fault information respectively corresponding to all the fault classes into the time register 56.

In an optional embodiment, each arbiter 521 in the fault arbitration module 52 can write the processing timestamp of the target to-be-processed fault information at the fault class corresponding to the arbiter 521 into the time register 56.

In an optional embodiment, the apparatus in the present disclosure further includes a fault code register 57.

The fault code register 57 is configured to store a fault code of the target to-be-processed fault information respectively corresponding to all the fault classes.

The fault arbitration module 52 is further configured to write the fault code of the target to-be-processed fault information respectively corresponding to all the fault classes into the fault code register 57.

In an optional embodiment, each arbiter 521 in the fault arbitration module 52 can write the fault code of the target to-be-processed fault information at the fault class corresponding to the arbiter 521 into the fault code register 57.

In an optional embodiment, the time register 56 and the fault code register 57 may be the same register, and are configured to store the processing timestamp and the fault code of the target to-be-processed fault information correspondingly.

FIG. 7 is a schematic diagram of a structure of an arbiter 521 according to an exemplary embodiment of the present disclosure.

In an optional embodiment, the arbiter 521 includes a round-robin authorization unit 5211.

The round-robin authorization unit 5211 is configured to arbitrate the to-be-processed fault information at the fault class corresponding to the arbiter based on the round robin algorithm to determine the target to-be-processed fault information at the fault class, and output the fault processing signal corresponding to the processing type of the target to-be-processed fault information.

In an optional embodiment, the arbiter 521 further includes a round-robin position register 5212.

The round-robin position register 5212 is configured to store a round-robin position.

The round-robin authorization unit 5211 is further configured to update, after outputting the fault processing signal corresponding to a target processing type of the target to-be-processed fault information, the round-robin position stored by the round-robin position register as a position of the target to-be-processed fault information in the to-be-processed fault information at this fault class.

In an optional embodiment, the arbiter 521 further includes an encoding unit 5213.

The encoding unit 5213 is configured to encode the target to-be-processed fault information to obtain the fault code of the target to-be-processed fault information, and write the fault code of the target to-be-processed fault information into the fault code register 57.

The encoding unit 5213 is connected to the fault code register 57, and writes the fault code of the target to-be-processed fault information into the fault code register 57 after obtaining the fault code.

In an optional embodiment, the round-robin authorization unit 5211 is further configured to write the processing timestamp of the target to-be-processed fault information into the time register 56.

In an optional embodiment, the arbiter 521 further includes a fault quantity register 5214.

The fault quantity register 5214 is configured to store a quantity of processing times for the target to-be-processed fault information.

The round-robin authorization unit 5211 is further configured to transmit, in response to that the quantity of processing times corresponding to the target to-be-processed fault information reaches a preset threshold of times, the target to-be-processed fault information to an arbiter at an upper fault class of the arbiter 521 for arbitration.

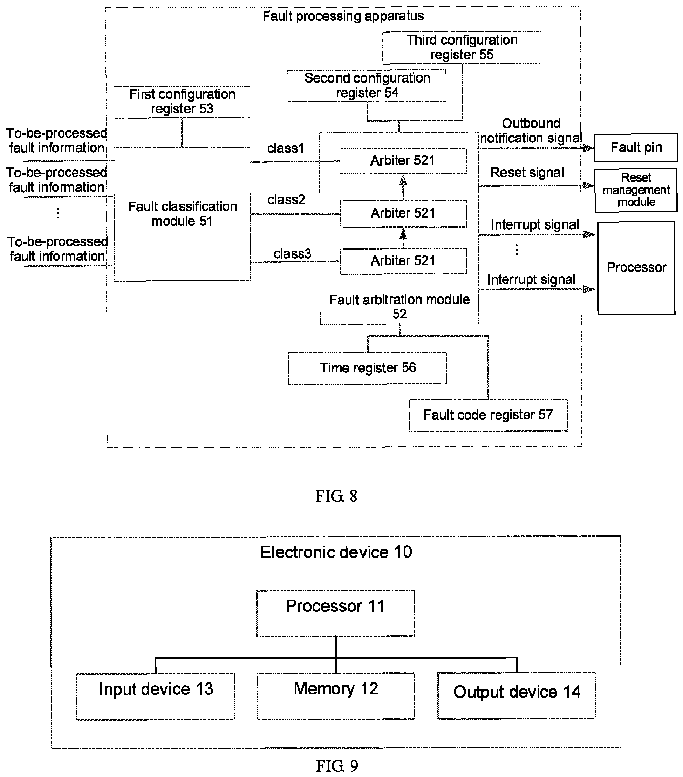

For example, FIG. 8 is a schematic diagram of a structure of a fault processing apparatus according to still another exemplary embodiment of the present disclosure. In this example, the fault classes include three classes: class 1, class 2, and class 3. The arbiters at adjacent fault classes are connected. When the quantity of processing times corresponding to the target to-be-processed fault information that is determined by a certain arbiter 521 reaches the preset threshold of times, the target to-be-processed fault information is transmitted to the arbiter at an upper class for arbitration. The arbiter 521 outputs a corresponding fault processing signal based on a processing type of the target to-be-processed fault information, such as a notification signal that needs to be sent by using a fault pin, a reset signal sent to a reset management module, or an interrupt signal sent to a processor.

In an optional inclusion, referring to FIG. 8, considering requirements on functional safety, the fault pin can be set with two pins, where one is a functional pin and the other is a redundant pin. The redundant pin can be configured to be the same as the functional pin, or can be configured to be a negated functional pin. This can be specifically set according to actual requirements. The class 1 is a highest fault class. The processing type of the target to-be-processed fault information at the class 1 can be configured to an outbound type, and a notification signal needs to be sent out through the fault pin. In addition, the arbiter at each fault class can be configured with an interrupt signal output line and a reset signal output line. The interrupt signal output line is connected to the processor, and the reset signal output line is connected to the reset management module. A quantity of reset signal output lines of each arbiter can be set according to actual requirements. Each arbiter can be configured with one interrupt signal output line, which can be specifically set according to actual requirements. A same type of reset signal output lines of each arbiter can output through OR logic. For example, the reset signal output lines at different fault classes but in a same subsystem are converted into one output through the OR logic, so that reset of the subsystem can be effectively triggered when a fault occurs to any fault class in the same subsystem and the subsystem needs to be reset. Each arbiter stops arbitration after completing the arbitration once and waits for the fault processing on the target to-be-processed fault information. For example, if the processing type of the target to-be-processed fault information is an interrupt type, an interrupt signal is sent to the processor. The processor reads a fault code and can also read a timestamp. If the target to-be-processed fault information is not a cascading fault, a corresponding interrupt service program can be entered to clear a fault source. If it is determined that the target to-be-processed fault information is a cascading fault, the fault code and the timestamp are read at a next class to locate the fault source. Further, the corresponding interrupt service program is entered, and the fault source is cleared. After this is completed, authorization enabling information is configured to trigger the arbiter to enter a new round of arbitration. If the processing type corresponding to the target to-be-processed fault information is a reset type, the processor is notified after reset of a relevant subsystem is completed. The processor configures the authorization enabling information to trigger the arbiter to enter a new round of arbitration.

In an optional embodiment, the fault processing apparatus in the present disclosure can also receive fault information sent by other chips or modules except the current chip, such as a fault notification signal sent by a fault processing apparatus of another chip. This can be specifically set according to actual requirements.

In an optional embodiment, external faults of the current chip can also serve as to-be-processed fault information to be classified and arbitrated by the fault processing apparatus in the present disclosure.

In an optional embodiment, at least a portion of the fault processing apparatus in the present disclosure is implemented by using a hardware logic circuit, thereby further improving processing efficiency.

In an optional embodiment, each register in the apparatus in the present disclosure can be performed with initial configuration by using the processor or can be configured during an application process. For example, the first configuration register is configured with the first corresponding relationship by using the processor, the second configuration register is configured with the second corresponding relationship by using the processor, and the third configuration register is configured with the authorization enabling information by using the processor. Initial configuration can be performed on the time register and the fault code register by using the processor, and corresponding content can be written by the arbiter during subsequent application processes. This can be specifically set according to actual requirements.

### Exemplary electronic device

An embodiment of the present disclosure further provides an electronic device, including: a memory, configured to store a computer program; and
a processor, configured to execute the computer program stored in the memory, where when the computer program is executed, the fault processing method according to any one of the foregoing embodiments of the present disclosure is implemented.

FIG. 9 is a schematic diagram of a structure of an electronic device according to an application embodiment of the present disclosure. In this embodiment, an electronic device 10 includes one or more processors 11 and a memory 12.

The processor 11 may be a central processing unit (CPU) or another form of processing unit having a data processing capability and/or an instruction execution capability, and can control another component in the electronic device 10 to perform a desired function.

The memory 12 can include one or more computer program products. The computer program product can include various forms of computer readable storage media, such as a volatile memory and/or a non-volatile memory. The volatile memory can include, for example, a random access memory (RAM) and/or a cache. The nonvolatile memory can include, for example, a read-only memory (ROM), a hard disk, and a flash memory. One or more computer program instructions can be stored on the computer readable storage medium. The processor 11 can execute the program instruction to implement the method according to various embodiments of the present disclosure that are described above and/or other desired functions. Various contents such as an input signal, a signal component, and a noise component can also be stored in the computer readable storage medium.

In an example, the electronic device 10 can further include an input device 13 and an output device 14. These components are connected to each other through a bus system and/or another form of connection mechanism (not shown).

For example, the input device 13 may be a microphone or a microphone array, which is configured to capture an input signal of a sound source.

In addition, the input device 13 can further include, for example, a keyboard and a mouse.

The output device 14 can output various information to the outside, including determined distance information, direction information, and the like. The output device 14 can include, for example, a display, a speaker, a printer, a communication network, and a remote output device connected by the communication network.

Certainly, for simplicity, FIG. 9 shows only some of components in the electronic device 10 that are related to the present disclosure, and components such as a bus and an input/output interface are omitted. In addition, according to specific application situations, the electronic device 10 can further include any other appropriate components.

In an optional embodiment, the electronic device can include the fault processing apparatus according to any one of the foregoing embodiments. At least a portion of the fault processing apparatus is implemented by using a hardware logic circuit, thereby further improving processing efficiency.

### Exemplary computer program product and computer readable storage medium

In addition to the foregoing method and device, the embodiments of the present disclosure can also relate to a computer program product, which includes computer program instructions. When the computer program instructions are run by a processor, the processor is enabled to perform the steps, of the method according to the embodiments of the present disclosure, that are described in the "exemplary method" section of this specification.

Basic principles of the present disclosure are described above in combination with specific embodiments. However, it should be pointed out that the advantages, superiorities, and effects mentioned in the present disclosure are merely examples but are not for limitation, and it cannot be considered that these advantages, superiorities, and effects are necessary for each embodiment of the present disclosure. In addition, specific details described above are merely for examples and for ease of understanding, rather than limitations. The details described above do not limit that the present disclosure must be implemented by using the foregoing specific details.

The various embodiments in this specification are all described in a progressive way, and each embodiment focuses on a difference from other embodiments. For the same or similar parts among the various embodiments, reference can be made to each other. The system embodiments basically correspond to the method embodiments, and thus are relatively simply described. For related parts, reference can be made to a part of the descriptions of the method embodiments.

The block diagrams of the equipment, the apparatus, the device, and the system involved in the present disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system can be connected, arranged, and configured in an arbitrary manner.

The method and the apparatus in the present disclosure can be implemented in many ways. For example, the method and the apparatus in the present disclosure can be implemented by software, hardware, firmware, or any combination of the software, the hardware, and the firmware. The foregoing sequence of the steps of the method is for illustration only, and the steps of the method in the present disclosure are not limited to the sequence specifically described above, unless otherwise specifically stated in any other manner. In addition, in some embodiments, the present disclosure can also be implemented as programs recorded in a recording medium. These programs include machine-readable instructions for implementing the method according to the present disclosure. Therefore, the present disclosure further relates to a recording medium storing a program for implementing the method according to the present disclosure.

It should be further pointed out that, various components or various steps in the apparatus, the device, and the method of the present invention can be disassembled and/or recombined. These disassembling and/or recombinations shall be regarded as equivalent solutions of the present invention.

## Claims

1. A fault processing method, comprising:
classifying (step 201) at least one piece of to-be-processed fault information to determine fault classes to which all the to-be-processed fault information respectively belongs, wherein the to-be-processed fault information comprises a fault identifier of a to-be-processed fault and
determining (step 2011) the fault classes to which all the to-be-processed fault information respectively belongs is based on a pre-configured first corresponding relationship between the fault identifier and the fault class;
arbitrating (step 202) the to-be-processed fault information included at all fault classes respectively, to determine target to-be-processed fault information respectively corresponding to all the fault classes, wherein the arbitrating (step 202) comprises: for any fault class, arbitrating (step 2021b) the to-be-processed fault information at this fault class is based on a round robin algorithm, to determine the target to-be-processed fault information corresponding to this fault class; and
performing (step 203) corresponding fault processing based on all the target to-be-processed fault information.

2. The method according to claim 1, wherein the performing (step 203) corresponding fault processing based on all the target to-be-processed fault information comprises:
determining (step 2031) processing types respectively corresponding to all the target to-be-processed fault information based on a pre-configured second corresponding relationship between the fault identifier and the processing type; and
outputting (step 2032) fault processing signals respectively corresponding to all the target to-be-processed fault information based on the processing types respectively corresponding to all the target to-be-processed fault information.

3. The method according to claim 1, wherein the arbitrating (step 202) the to-be-processed fault information included at all fault classes respectively, to determine target to-be-processed fault information respectively corresponding to all the fault classes comprises:
in response to that authorization enabling information is detected, arbitrating (step 2021a) the to-be-processed fault information included at all the fault classes respectively, to determine the target to-be-processed fault information respectively corresponding to all the fault classes.

4. The method according to claim 1, further comprising:
storing (step 310) processing timestamps of the target to-be-processed fault information respectively corresponding to all the fault classes; and/or
encoding (step 320) the target to-be-processed fault information respectively corresponding to all the fault classes to obtain a fault code of the target to-be-processed fault information respectively corresponding to all the fault classes; and
storing (step 330) the fault code of the target to-be-processed fault information respectively corresponding to all the fault classes.

5. The method according to claim 1, further comprising:
for any fault class, recording (step 340) a position of the target to-be-processed fault information at this fault class in the to-be-processed fault information at this fault class.

6. The method according to claim 1, wherein after the arbitrating (step 202) the to-be-processed fault information included at all fault classes respectively, to determine target to-be-processed fault information respectively corresponding to all the fault classes, the method further comprises:
recording (step 410) a quantity of processing times for each piece of target to-be-processed fault information; and
the method further comprises:
for any target to-be-processed fault information, in response to that the quantity of processing times corresponding to the target to-be-processed fault information reaches a preset threshold of times, updating (step 420) the fault class of the target to-be-processed fault information to an upper fault class of the current fault class, so that the target to-be-processed fault information serves as the to-be-processed fault information at the upper fault class to be arbitrated.

7. A fault processing apparatus, comprising:
a fault classification module (51), configured to classify at least one piece of to-be-processed fault information to determine fault classes to which all the to-be-processed fault information respectively belongs, wherein the to-be-processed fault information comprises a fault identifier of a to-be-processed fault, and
configured to determine the fault classes to which all the to-be-processed fault information respectively belongs is based on a pre-configured first corresponding relationship between the fault identifier and the fault class; and
a fault arbitration module (52), configured to arbitrate the to-be-processed fault information included at all fault classes respectively, to determine target to-be-processed fault information respectively corresponding to all the fault classes, wherein the arbitrating comprises: for any fault class, arbitrating (step 2021b) the to-be-processed fault information at this fault class is based on a round robin algorithm, to determine the target to-be-processed fault information corresponding to this fault class, and perform corresponding fault processing based on all the target to-be-processed fault information.

8. The fault processing apparatus according to claim 7, wherein the fault arbitration module (52) includes at least two arbiters (521), wherein each arbiter (521) of the at least two arbiters corresponds to one fault class, and each arbiter (521) is configured to arbitrate the to-be-processed fault information at the fault class corresponding to the arbiter (521) to determine the target to-be-processed fault information at the fault class, and perform corresponding fault processing based on the target to-be-processed fault information.

9. The fault processing apparatus according to claim 8, wherein the arbiters (521) can be implemented through hardware logic.

10. The fault processing apparatus according to claim 8, wherein the apparatus further comprises a first configuration register (53) which is configured to store a pre-configured first corresponding relationship between the fault identifier and the fault class, and
the fault classification module (51) is configured to determine the fault classes to which the to-be-processed fault information respectively belongs based on the first corresponding relationship stored by the first configuration register (53), and transmit the to-be-processed fault information to the corresponding arbiter (521) in the fault arbitration module (52) based on the fault classes to which the to-be-processed fault information respectively belongs.

11. The fault processing apparatus according to claim 8, wherein the apparatus further includes a second configuration register (54) which is configured to store a pre-configured second corresponding relationship between the fault identifier and a processing type, and
the fault arbitration module (52) is further configured to determine processing types respectively corresponding to all the target to-be-processed fault information based on the second corresponding relationship stored by the second configuration register (54), and output fault processing signals respectively corresponding to all the target to-be-processed fault information based on the processing types respectively corresponding to all the target to-be-processed fault information, wherein the fault arbitration module (52) is connected to the second configuration register (54), to read the second corresponding relationship from the second configuration register.

12. A computer readable storage medium, wherein the storage medium stores a computer program, and the computer program is used for implementing the fault processing method according to any one of claims 1 to 6; or
the storage medium is configured to store data that needs to be stored by at least one hardware logic circuit of the fault processing apparatus according to any one of claims 7 to 11, to enable the hardware logic circuit to implement corresponding functions during operation.

13. An electronic device (10), wherein the electronic device comprises:
a processor (11); and
a memory (12), configured to store processor-executable instructions, wherein
the processor (11) is configured to read the executable instructions from the memory (12), and execute the instructions to implement the fault processing method according to any one of claims 1 to 6; or
the electronic device comprises the fault processing apparatus according to any one of claims 7 to 11, wherein at least a portion of the fault processing apparatus is implemented by using a hardware logic circuit.

## Patentansprüche

1. Fehlerverarbeitungsverfahren, umfassend:
Klassifizieren (Schritt 201) mindestens einer zu verarbeitenden Fehlerinformation, um Fehlerklassen zu bestimmen, zu denen alle zu verarbeitenden Fehlerinformationen jeweils gehören, wobei die zu verarbeitende Fehlerinformation eine Fehlerkennung eines zu verarbeitenden Fehlers umfasst, und
Bestimmen (Schritt 2011) der Fehlerklassen, zu denen alle zu verarbeitenden Fehlerinformationen jeweils gehören, basierend auf einer vorkonfigurierten ersten entsprechenden Beziehung bzw. Entsprechungsbeziehung zwischen der Fehlerkennung und der Fehlerklasse;
Schlichten bzw. Arbitrieren (Schritt 202) der in allen Fehlerklassen jeweils enthaltenen zu verarbeitenden Fehlerinformationen, um jeweils den Fehlerklassen entsprechende Ziel-Fehlerinformationen zu bestimmen, wobei das Schlichten (Schritt 202) umfasst: für jede Fehlerklasse, Schlichten (Schritt 2021b) der zu verarbeitenden Fehlerinformationen dieser Fehlerklasse basierend auf einem Round-Robin-Algorithmus, um die dieser Fehlerklasse entsprechende Ziel-Fehlerinformation zu bestimmen; und
Durchführen (Schritt 203) einer entsprechenden Fehlerverarbeitung basierend auf allen Ziel-Fehlerinformationen.

2. Verfahren nach Anspruch 1, wobei das Durchführen (Schritt 203) einer entsprechenden Fehlerverarbeitung basierend auf allen Ziel-Fehlerinformationen umfasst:
Bestimmen (Schritt 2031) von Verarbeitungstypen, die jeweils allen Ziel-Fehlerinformationen entsprechen, basierend auf einer vorkonfigurierten zweiten entsprechenden Beziehung bzw. Entsprechungsbeziehung zwischen der Fehlerkennung und dem Verarbeitungstyp; und
Ausgeben (Schritt 2032) von Fehlerverarbeitungssignalen, die jeweils allen Ziel-Fehlerinformationen entsprechen, basierend auf den Verarbeitungstypen, die jeweils allen Ziel-Fehlerinformationen entsprechen.

3. Verfahren nach Anspruch 1, wobei das Schlichten bzw. Arbitrieren (Schritt 202) der in allen Fehlerklassen jeweils enthaltenen zu verarbeitenden Fehlerinformationen, um jeweils den Fehlerklassen entsprechende Ziel-Fehlerinformationen zu bestimmen, umfasst:
als Reaktion darauf, dass eine Autorisierungsfreigabeinformation erkannt wird, Schlichten (Schritt 2021a) der in allen Fehlerklassen jeweils enthaltenen zu verarbeitenden Fehlerinformationen, um die jeweils den Fehlerklassen entsprechenden Ziel-Fehlerinformationen zu bestimmen.

4. Verfahren nach Anspruch 1, ferner umfassend:
Speichern (Schritt 310) von Verarbeitungszeitstempeln der Ziel-Fehlerinformationen, die jeweils allen Fehlerklassen entsprechen; und/oder
Kodieren (Schritt 320) der Ziel-Fehlerinformationen, die jeweils allen Fehlerklassen entsprechen, um einen Fehlercode der Ziel-Fehlerinformationen zu erhalten, die jeweils allen Fehlerklassen entsprechen; und
Speichern (Schritt 330) des Fehlercodes der Ziel-Fehlerinformationen, die jeweils allen Fehlerklassen entsprechen.

5. Verfahren nach Anspruch 1, ferner umfassend:
für jede Fehlerklasse, Aufzeichnen (Schritt 340) einer Position der Ziel-Fehlerinformation dieser Fehlerklasse in den zu verarbeitenden Fehlerinformationen dieser Fehlerklasse.

6. Verfahren nach Anspruch 1, wobei nach dem Schlichten (Schritt 202) der in allen Fehlerklassen jeweils enthaltenen zu verarbeitenden Fehlerinformationen, um jeweils den Fehlerklassen entsprechende Ziel-Fehlerinformationen zu bestimmen, das Verfahren ferner umfasst:
Aufzeichnen (Schritt 410) einer Anzahl von Verarbeitungsvorgängen für jede Ziel-Fehlerinformation; und
das Verfahren ferner umfasst:
für jede Ziel-Fehlerinformation, als Reaktion darauf, dass die Anzahl der Verarbeitungsvorgänge, die der Ziel-Fehlerinformation entspricht, einen voreingestellten Schwellenwert erreicht, Aktualisieren (Schritt 420) der Fehlerklasse der Ziel-Fehlerinformation auf eine übergeordnete Fehlerklasse der aktuellen Fehlerklasse, sodass die Ziel-Fehlerinformation als die zu verarbeitende Fehlerinformation in der übergeordneten Fehlerklasse dient, um geschlichtet zu werden.

7. Fehlerverarbeitungsvorrichtung, umfassend:
ein Fehlerklassifizierungsmodul (51), das konfiguriert ist, um mindestens eine zu verarbeitende Fehlerinformation zu klassifizieren, um Fehlerklassen zu bestimmen, zu denen alle zu verarbeitenden Fehlerinformationen jeweils gehören, wobei die zu verarbeitende Fehlerinformation eine Fehlerkennung eines zu verarbeitenden Fehlers umfasst, und
konfiguriert ist, um die Fehlerklassen, zu denen alle zu verarbeitenden Fehlerinformationen jeweils gehören, basierend auf einer vorkonfigurierten ersten entsprechenden Beziehung bzw. Entsprechungsbeziehung zwischen der Fehlerkennung und der Fehlerklasse zu bestimmen; und
ein Fehlerschlichtungs- bzw. -arbitrierungsmodul (52), das konfiguriert ist, um die in allen Fehlerklassen jeweils enthaltenen zu verarbeitenden Fehlerinformationen zu schlichten, um jeweils den Fehlerklassen entsprechende Ziel-Fehlerinformationen zu bestimmen, wobei das Schlichten umfasst: für jede Fehlerklasse, Schlichten (Schritt 2021b) der zu verarbeitenden Fehlerinformationen dieser Fehlerklasse basierend auf einem Round-Robin-Algorithmus, um die dieser Fehlerklasse entsprechende Ziel-Fehlerinformation zu bestimmen, und eine entsprechende Fehlerverarbeitung basierend auf allen Ziel-Fehlerinformationen durchzuführen.

8. Fehlerverarbeitungsvorrichtung nach Anspruch 7, wobei das Fehlerschlichtungsmodul (52) mindestens zwei Schiedsrichter (521) umfasst, wobei jeder Schiedsrichter (521) der mindestens zwei Schiedsrichter einer Fehlerklasse entspricht, und jeder Schiedsrichter (521) konfiguriert ist, um die zu verarbeitenden Fehlerinformationen der dem Schiedsrichter (521) entsprechenden Fehlerklasse zu schlichten, um die Ziel-Fehlerinformation der Fehlerklasse zu bestimmen, und eine entsprechende Fehlerverarbeitung basierend auf der Ziel-Fehlerinformation durchzuführen.

9. Fehlerverarbeitungsvorrichtung nach Anspruch 8, wobei die Schiedsrichter (521) durch Hardwarelogik implementiert werden können.

10. Fehlerverarbeitungsvorrichtung nach Anspruch 8, wobei die Vorrichtung ferner ein erstes Konfigurationsregister (53) umfasst, das konfiguriert ist, um eine vorkonfigurierte erste Entsprechungsbeziehung zwischen der Fehlerkennung und der Fehlerklasse zu speichern, und
das Fehlerklassifizierungsmodul (51) konfiguriert ist, um die Fehlerklassen, zu denen die zu verarbeitenden Fehlerinformationen jeweils gehören, basierend auf der vom ersten Konfigurationsregister (53) gespeicherten ersten Entsprechungsbeziehung zu bestimmen, und die zu verarbeitenden Fehlerinformationen basierend auf den Fehlerklassen, zu denen die zu verarbeitenden Fehlerinformationen jeweils gehören, an den entsprechenden Schiedsrichter (521) im Fehlerschlichtungsmodul (52) zu übertragen.

11. Fehlerverarbeitungsvorrichtung nach Anspruch 8, wobei die Vorrichtung ferner ein zweites Konfigurationsregister (54) umfasst, das konfiguriert ist, um eine vorkonfigurierte zweite Entsprechungsbeziehung zwischen der Fehlerkennung und einem Verarbeitungstyp zu speichern, und
das Fehlerschlichtungsmodul (52) ferner konfiguriert ist, um Verarbeitungstypen, die jeweils allen Ziel-Fehlerinformationen entsprechen, basierend auf der vom zweiten Konfigurationsregister (54) gespeicherten zweiten Entsprechungsbeziehung zu bestimmen, und Fehlerverarbeitungssignale, die jeweils allen Ziel-Fehlerinformationen entsprechen, basierend auf den Verarbeitungstypen, die jeweils allen Ziel-Fehlerinformationen entsprechen, auszugeben, wobei das Fehlerschlichtungsmodul (52) mit dem zweiten Konfigurationsregister (54) verbunden ist, um die zweite Entsprechungsbeziehung aus dem zweiten Konfigurationsregister zu lesen.

12. Computerlesbares Speichermedium, wobei das Speichermedium ein Computerprogramm speichert, und das Computerprogramm zur Implementierung des Fehlerverarbeitungsverfahrens nach einem der Ansprüche 1 bis 6 verwendet wird; oder
das Speichermedium konfiguriert ist, um Daten zu speichern, die von mindestens einer Hardwarelogikschaltung der Fehlerverarbeitungsvorrichtung nach einem der Ansprüche 7 bis 11 gespeichert werden müssen, um der Hardwarelogikschaltung zu ermöglichen, während des Betriebs entsprechende Funktionen zu implementieren.

13. Elektronische Vorrichtung (10), wobei die elektronische Vorrichtung umfasst:
einen Prozessor (11); und
einen Speicher (12), der konfiguriert ist, um prozessorausführbare Anweisungen zu speichern, wobei
der Prozessor (11) konfiguriert ist, um die ausführbaren Anweisungen aus dem Speicher (12) zu lesen und die Anweisungen auszuführen, um das Fehlerverarbeitungsverfahren nach einem der Ansprüche 1 bis 6 zu implementieren; oder
die elektronische Vorrichtung die Fehlerverarbeitungsvorrichtung nach einem der Ansprüche 7 bis 11 umfasst, wobei mindestens ein Teil der Fehlerverarbeitungsvorrichtung unter Verwendung einer Hardwarelogikschaltung implementiert ist.

## Revendications

1. Procédé de traitement de défaut, comprenant :
la classification (étape 201) d'au moins une information de défaut à traiter pour déterminer des classes de défaut auxquelles appartiennent respectivement toutes les informations de défaut à traiter, dans lequel l'information de défaut à traiter comprend un identifiant de défaut d'un défaut à traiter, et
la détermination (étape 2011) des classes de défaut auxquelles appartiennent respectivement toutes les informations de défaut à traiter est basée sur une première relation de correspondance préconfigurée entre l'identifiant de défaut et la classe de défaut ;
l'arbitrage (étape 202) des informations de défaut à traiter incluses dans toutes les classes de défaut respectivement, pour déterminer des informations de défaut à traiter cibles correspondant respectivement à toutes les classes de défaut, dans lequel l'arbitrage (étape 202) comprend : pour toute classe de défaut, l'arbitrage (étape 2021b) des informations de défaut à traiter de cette classe de défaut est basé sur un algorithme de type round robin, pour déterminer l'information de défaut à traiter cible correspondant à cette classe de défaut ; et
l'exécution (étape 203) d'un traitement de défaut correspondant basé sur toutes les informations de défaut à traiter cibles.

2. Procédé selon la revendication 1, dans lequel l'exécution (étape 203) d'un traitement de défaut correspondant basé sur toutes les informations de défaut à traiter cibles comprend :
la détermination (étape 2031) de types de traitement correspondant respectivement à toutes les informations de défaut à traiter cibles en fonction d'une deuxième relation de correspondance préconfigurée entre l'identifiant de défaut et le type de traitement ; et
la sortie (étape 2032) de signaux de traitement de défaut correspondant respectivement à toutes les informations de défaut à traiter cibles en fonction des types de traitement correspondant respectivement à toutes les informations de défaut à traiter cibles.

3. Procédé selon la revendication 1, dans lequel l'arbitrage (étape 202) des informations de défaut à traiter incluses dans toutes les classes de défaut respectivement, pour déterminer des informations de défaut à traiter cibles correspondant respectivement à toutes les classes de défaut comprend :
en réponse à la détection d'une information d'activation d'autorisation, l'arbitrage (étape 2021a) des informations de défaut à traiter incluses dans toutes les classes de défaut respectivement, pour déterminer les informations de défaut à traiter cibles correspondant respectivement à toutes les classes de défaut.

4. Procédé selon la revendication 1, comprenant en outre :
le stockage (étape 310) d'horodatages de traitement des informations de défaut à traiter cibles correspondant respectivement à toutes les classes de défaut ; et/ou
le codage (étape 320) des informations de défaut à traiter cibles correspondant respectivement à toutes les classes de défaut pour obtenir un code de défaut des informations de défaut à traiter cibles correspondant respectivement à toutes les classes de défaut ; et
le stockage (étape 330) du code de défaut des informations de défaut à traiter cibles correspondant respectivement à toutes les classes de défaut.

5. Procédé selon la revendication 1, comprenant en outre :
pour toute classe de défaut, l'enregistrement (étape 340) d'une position de l'information de défaut à traiter cible de cette classe de défaut dans les informations de défaut à traiter de cette classe de défaut.

6. Procédé selon la revendication 1, dans lequel après l'arbitrage (étape 202) des informations de défaut à traiter incluses dans toutes les classes de défaut respectivement, pour déterminer des informations de défaut à traiter cibles correspondant respectivement à toutes les classes de défaut, le procédé comprend en outre :
l'enregistrement (étape 410) d'une quantité de fois de traitement pour chaque information de défaut à traiter cible ; et
le procédé comprend en outre :
pour toute information de défaut à traiter cible, en réponse au fait que la quantité de fois de traitement correspondant à l'information de défaut à traiter cible atteint un seuil prédéterminé de fois, la mise à jour (étape 420) de la classe de défaut de l'information de défaut à traiter cible vers une classe de défaut supérieure de la classe de défaut actuelle, de sorte que l'information de défaut à traiter cible serve d'information de défaut à traiter dans la classe de défaut supérieure à arbitrer.

7. Appareil de traitement de défaut, comprenant :
un module de classification de défaut (51), configuré pour classer au moins une information de défaut à traiter pour déterminer des classes de défaut auxquelles appartiennent respectivement toutes les informations de défaut à traiter, dans lequel l'information de défaut à traiter comprend un identifiant de défaut d'un défaut à traiter, et
configuré pour déterminer les classes de défaut auxquelles appartiennent respectivement toutes les informations de défaut à traiter est basé sur une première relation de correspondance préconfigurée entre l'identifiant de défaut et la classe de défaut ; et
un module d'arbitrage de défaut (52), configuré pour arbitrer les informations de défaut à traiter incluses dans toutes les classes de défaut respectivement, pour déterminer des informations de défaut à traiter cibles correspondant respectivement à toutes les classes de défaut, dans lequel l'arbitrage comprend : pour toute classe de défaut, l'arbitrage (étape 2021b) des informations de défaut à traiter de cette classe de défaut est basé sur un algorithme de type round robin, pour déterminer l'information de défaut à traiter cible correspondant à cette classe de défaut, et exécuter un traitement de défaut correspondant basé sur toutes les informations de défaut à traiter cibles.

8. Appareil de traitement de défaut selon la revendication 7, dans lequel le module d'arbitrage de défaut (52) comprend au moins deux arbitres (521), dans lequel chaque arbitre (521) des au moins deux arbitres correspond à une classe de défaut, et chaque arbitre (521) est configuré pour arbitrer les informations de défaut à traiter de la classe de défaut correspondant à l'arbitre (521) pour déterminer l'information de défaut à traiter cible de la classe de défaut, et exécuter un traitement de défaut correspondant basé sur l'information de défaut à traiter cible.

9. Appareil de traitement de défaut selon la revendication 8, dans lequel les arbitres (521) peuvent être implémentés par une logique matérielle.

10. Appareil de traitement de défaut selon la revendication 8, dans lequel l'appareil comprend en outre un premier registre de configuration (53) qui est configuré pour stocker une première relation de correspondance préconfigurée entre l'identifiant de défaut et la classe de défaut, et
le module de classification de défaut (51) est configuré pour déterminer les classes de défaut auxquelles appartiennent respectivement les informations de défaut à traiter basées sur la première relation de correspondance stockée par le premier registre de configuration (53), et transmettre les informations de défaut à traiter à l'arbitre correspondant (521) dans le module d'arbitrage de défaut (52) basé sur les classes de défaut auxquelles appartiennent respectivement les informations de défaut à traiter.

11. Appareil de traitement de défaut selon la revendication 8, dans lequel l'appareil comprend en outre un deuxième registre de configuration (54) qui est configuré pour stocker une deuxième relation de correspondance préconfigurée entre l'identifiant de défaut et un type de traitement, et
le module d'arbitrage de défaut (52) est en outre configuré pour déterminer des types de traitement correspondant respectivement à toutes les informations de défaut à traiter cibles basés sur la deuxième relation de correspondance stockée par le deuxième registre de configuration (54), et sortir des signaux de traitement de défaut correspondant respectivement à toutes les informations de défaut à traiter cibles basés sur les types de traitement correspondant respectivement à toutes les informations de défaut à traiter cibles, dans lequel le module d'arbitrage de défaut (52) est connecté au deuxième registre de configuration (54), pour lire la deuxième relation de correspondance à partir du deuxième registre de configuration.

12. Support de stockage lisible par ordinateur, dans lequel le support de stockage stocke un programme informatique, et le programme informatique est utilisé pour mettre en œuvre le procédé de traitement de défaut selon l'une quelconque des revendications 1 à 6 ; ou
le support de stockage est configuré pour stocker des données devant être stockées par au moins un circuit logique matériel de l'appareil de traitement de défaut selon l'une quelconque des revendications 7 à 11, pour permettre au circuit logique matériel de mettre en œuvre des fonctions correspondantes pendant le fonctionnement.

13. Dispositif électronique (10), dans lequel le dispositif électronique comprend :
un processeur (11) ; et
une mémoire (12), configurée pour stocker des instructions exécutables par le processeur, dans
lequel le processeur (11) est configuré pour lire les instructions exécutables à partir de la mémoire (12), et exécuter les instructions pour mettre en œuvre le procédé de traitement de défaut selon l'une quelconque des revendications 1 à 6 ; ou
le dispositif électronique comprend l'appareil de traitement de défaut selon l'une quelconque des revendications 7 à 11, dans lequel au moins une partie de l'appareil de traitement de défaut est mise en œuvre à l'aide d'un circuit logique matériel.
